# EUROPEAN PATENT APPLICATION

(11) **EP 1 439 493 A2**
(43) Date of publication of application: **21.07.2004**
(21) Application number: 04396005.3
(22) Date of filing: 12.01.2004
(51) Int. Cl.: G06T 15/40

(54) **Occlusion culling method**

(30) Priority: 17.01.2003 FI 20030072
(71) Applicant: Hybrid Graphics Oy, 00130 Helsinki (FI); Bitboys, Oy, 29600 Noormarkku (FI)
(72) Inventor: Timo, Aila, 00140 Helsinki (FI)
(74) Representative: Simmelvuo, Markku

(57) **Abstract**

Present invention teaches a method and a system for enhanced visibility test in three-dimensional computer graphics. In the invention two separate visibility tests (22, 25) are applied. The visibility tests harness a Z-buffer (21). First test (22) is applied directly after geometry processing (20). After first test the occlusion information of the primitives is computed and stored to an occlusion buffer (24). The occlusion cache (24) may be compressed. The second visibility test (25) is applied for buffered primitives. Visible primitives are rasterized and moved to the frame buffer. The content of the frame buffer is displayed on the screen.

## Description

### FIELD OF THE INVENTION

The invention relates to visibility optimization in three-dimensional computer graphics.

### BACKGROUND OF THE INVENTION

Three-dimensional computer graphics have become very popular for example in modern computer games. Nowadays systems are able to handle complex scenes with thousands or millions of graphics primitives, which are typically triangles, formed by three vertices. The triangles are rendered to the screen to form visible graphics. The viewport is typically formed by a camera, which is moved dynamically in the scene. In complex scenes most of the triangles are hidden to the viewport. In computer games this could be e.g. a car racing game in which the camera is inside the car and the car is driven in city streets. Most of the buildings of the scene are behind other buildings so only the buildings by the street to be driven are visible. Therefore a visibility check has to be done to the objects for avoiding the rasterization of hidden surfaces.

Present systems for rendering scenes typically apply a method for occlusion culling with Z-buffer rendering. The function of the Z-buffer is to store the distance of each pixel forward from a reference point. Pixels with closer Z values are assumed to be in front of pixels with furthest Z values, so that the process of rendering involves the conceptually simple process of calculating the Z value of each pixel for a given object and, where objects or faces of objects overlap, retaining pixels with the closest Z value. Z-buffer is implemented in modern graphics hardware, but it can be done also by software. There are several different ways to implement Z-buffer but the above described implementation is most common.

Z-buffering as such is resources demanding operation as it is computed to each pixel of the objects in the viewport even if they are not visible. Thus an occlusion culling method is implemented. US 6,480,205 discloses an embodiment of occlusion culling method. In the method Z-buffer rendering of three-dimensional scenes is made more efficient through a method for occlusion culling by which occluded geometry is removed prior to rasterization. The method uses hierarchical Z-buffering to reduce the quantity of image and depth information that needs to be accessed. A separate culling stage in the graphics pipeline culls occluded geometry and passes visible geometry on to a rendering stage. Other implementations are discussed e.g. in US 6,094,200, US 6,266,064, US 5,751,291 and US 5,557,455.

The drawbacks of the present solutions are that the occlusion culling is done separately to each primitive before rasterization. Occlusion culling is applied to the primitives in order they arrive from geometry processing unit. If the processing is initiated from visible objects the present methods work fine as all the rasterization of hidden objects is avoided. If the objects are in a processing order from back to front all the objects are computed and rasterized and the traditional occlusion culling method is not beneficial. In real life the order is more or less random so that typically a large amount of primitives has to be computed even if they are not visible. As the rasterization is complex operation valuable resources are wasted. The drawback is more significant in terminals with low computing capacity. These low capacity terminals are e.g. mobile terminals. Thus there is an obvious need for effective visibility detection method.

### PURPOSE OF THE INVENTION

The purpose of the invention is to disclose an efficient method and system for visibility testing in three-dimensional computer graphics. Also the object of the present invention is to provide a method that can be easily implemented in hardware.

### SUMMARY OF THE INVENTION

The invention discloses a method and system for efficient occlusion culling. In the invention a separate occlusion data buffer is implemented. The occlusion data is collected to the buffer before rasterization so that hidden objects are not rasterized. The visibility of all or relatively large set of primitives is tested. In the invention a two-step visibility test is applied. The first step is traditional visibility test in which an occlusion culling method is applied to each primitive computed by geometry processor. If the primitive is not visible it may be discarded immediately. Otherwise the primitive is stored into the occlusion buffer. This does not guarantee that the primitive is visible in the final result. The occlusion buffer is arranged to collect all or portion of an occlusion data of the objects in the viewport to be rendered. When the necessary data has been collected the occlusion data is processed. In processing the occlusion data is arranged so that only visible primitives are rasterized to the screen. The arranging of the primitives does not change the order of the primitives but removes the hidden ones. Typically the occlusion buffer is a ring buffer and the content is processed continuously so that the buffered primitives are sent to the second visibility test and pixel processing unit as soon as the second visibility test is able to process the primitives. Otherwise the second visibility test and pixel processing unit would not have anything to process which would waste resources. In some cases this may cause rendering the hidden primitives but typically it is faster than collecting primitives for complete visibility test.

As visibility test has to be done for every graphics primitive also in traditional solutions the invention is beneficial. In traditional solutions all the primitives that have passed first visibility test are rasterized to the frame buffer even if they are not visible in the final result. In the method according to the invention only the primitives visible in the final result are rasterized. Thus the invention saves the computing time spent on computing hidden primitives. This is a significant difference when large amount of graphics primitives are to be processed or computing capacity of the terminal is low.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Fig. 1** is a flow chart of the visibility testing method according to one embodiment of the present invention,
**Fig. 2** is a block diagram of an example embodiment of the present invention,
**Fig. 3** is a block diagram of an example implementation of occlusion fusion unit presented in figure 2.

### DETAILED DESCRIPTION OF THE INVENTION

Reference will now be made in detail to the embodiments of the present invention, examples of which are illustrated in the accompanying drawings.

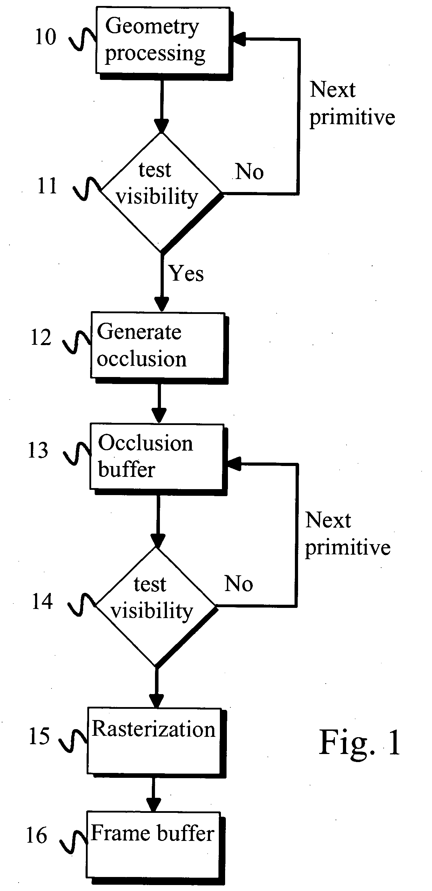

In figure 1 a flow chart of the method according to the invention is represented. Present graphics hardware is typically arranged to compute geometry information of each graphics primitive. Typically these primitives form triangles of three vertices that form a scene to be rendered. Typically scenes are e.g. models of buildings or cities. A view to the scene is rendered according to the camera that is moved inside the scene. The geometry processing, step 10, comprises computing the rotations, camera movements and three-dimensional animations on the screen.

After computing the geometry the visibility of the primitive is tested, step 11. The first visibility test is performed in order of arriving from the geometry processor. The visibility is checked against already computed primitives. If the primitive is hidden, it may be discarded and next primitive is processed. If the primitive is visible, the occlusion data will be computed, step 12. This occlusion data is sent to the fusion cache, which determines when each block in the viewport has been completely covered. This is done according to the following algorithm. Each line in the fusion cache is initially marked as invalid. When a pixel is sent to the fusion cache, an associative lookup of the block screen coordinates is performed on the cache. If no block is found, a new line is allocated in the cache, the furthest Z value is set to the pixel Z value and the coverage flags are set to false. The x and y values of the block are written. The Z value of the pixel is then compared with the max_z value and if the new value is greater, the max_z value is updated. The coverage flag is set for the pixel. If all the coverage flags have been set, the max_Z value is compared with the values in the first visibility test Z-buffer, which is preferably a low resolution Z-buffer. In case of low resolution Z-buffer a separate high resolution buffer for second visibility test can be included. The value in the Z-buffer is set to the lesser of the 2 values and the cache line is marked as invalid. Optionally, this operation may be postponed until the end of the current primitive. If a new cache line is required but there are none available, then a cache line is selected by some algorithm and marked as invalid. The algorithm may be any such as the least recently used (LRU) algorithm or by selecting a cache line with the least number of set coverage flags. The Z value of each pixel is also compared with the value in the Z-buffer. If no pixel within the primitive has a Z value less than the corresponding value in the Z-buffer, the primitive must be occluded and can be discarded (hidden primitive removal). The remaining primitive, plus any state information are stored to the occlusion data buffer, step 13. By this arrangement the primitives that might be visible are processed as a group. The fusion cache may be replaced with a tile cache, containing the Z values for all pixels within each tile, there being a number of such tiles stored within the cache.

When occlusion data for each primitive has been computed an occlusion fusion method is applied for each primitive in the occlusion data buffer. Applied occlusion fusion method may be any commonly known occlusion fusion method. The occlusion fusion is applied because typically the scenes are formed by large amount of little objects that are typically formed by triangles. While one object usually does not hide object behind it, combining several objects may hide it. For example, one tree in a forest does not hide the field behind the forest but the group of trees does. Thus after first visibility test there are objects that are hidden in the final result and second visibility test must be applied, step 14. There are prior art solutions to reduce the computation requirements that are beneficial also with the present invention. For example a bounding volume method may be applied to reduce the visibility testing and geometry computing. The bounding volume method is applied before geometry processing. In the method an object formed by graphics primitives is bounded by a box. The visibility of the box is tested. If the box is hidden, the object inside the box is also hidden and can be discarded. With complex objects this may gain significant save in computing requirements. If the box is visible, the object inside the box is processed as above mentioned.

The second visibility test removes most of the hidden primitives. As the rasterization of the primitives is demanding step, a significant time saving can be gained. After second visibility test all the visible primitives are rasterized, step 15. After rasterization the view will be transferred to the frame buffer for expecting to be drawn to the monitor or other viewing device.

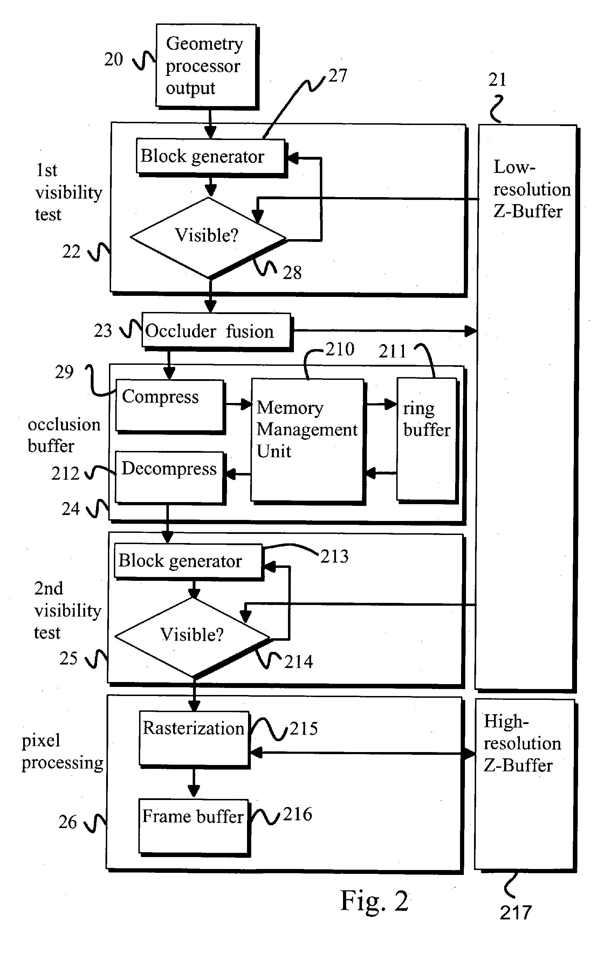

In figure 2 is a block diagram of an example implementation of the invention. Typically the implementation is a graphics processor unit but it may be also a graphics card or similar. Typically the unit comprises a geometry processor 20, low resolution Z-buffer 21, 1^{st} visibility test 22, occlusion fusion unit 23, occlusion buffer 24, 2^{nd} visibility test 25 and pixel processing unit 26.

The geometry processor 20 and Z-buffer 21 are similar as in prior art graphics hardware. Advantageously the Z-buffer is a low resolution Z-buffer. The geometry processor 20 is arranged to compute all the geometry relating to three-dimensional scenes and objects. Typically the geometry data comprises vertices and connectivity information. The geometry processor 20 is typically embedded to the graphics processor. The Z-buffer 21 stores visibility information. When a graphics primitive arrives from the graphics processor 20, it is subdivided into pixel blocks, typically 8x8 pixels each. Each block is tested against a value currently stored in the Z-buffer 21. In first visibility test unit 22 consists of a block generator 27 and a visibility tester 28. The visibility test unit 22 takes a triangle as an input and outputs the non-empty pixel blocks with corresponding coverage masks and depth ranges. The coverage mask indicates which pixels of the block are covered by the triangle. When the triangle is fully processed, the unit sends an information signal and starts processing the next triangle if available. The information signal indicates the end of the triangle. Each non-empty block is tested for visibility by using the corresponding value currently stored in Z-buffer 21. Visible blocks are forwarded to occlusion fusion unit 23 and hidden blocks are discarded.

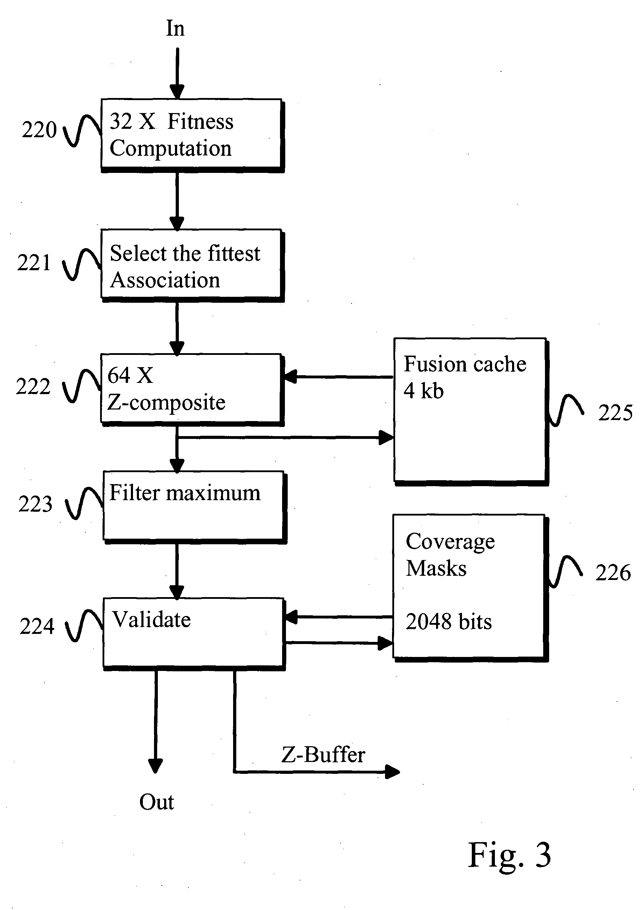

The occlusion fusion unit 23 may be any of known occlusion fusion unit implementations. One example is represented in figure 3. The example processes 8x8 of depth information and includes an embedded 4 kb fusion cache 225. The fusion cache 225 includes 32 associative blocks, each of which may be mapped to any screen-space coordinates. Each associative block corresponding to a designated 8*8 pixel are in the embedded occlusion fusion cache 225. Input for occlusion fusion unit comprises a coverage mask for 8x8 pixel block, its screen-space coordinates and the minimum and the maximum depth values. At this stage the input blocks are visible because the hidden ones have been discarded by the 1^{st} visibility test 22. An association is selected to the input block by performing a fitness computation 220 for all the 32 associative blocks in parallel. Associative value with the highest fitness value 221 is selected and mapped into the new input coordinates. If selected associative block is full, per-pixel depth comparisons are made 222, the maximum depth value is searched 223, the resulting coverage mask is updated 224 and the maximum depth value is stored into Z-buffer 21. If the mapping of the selected associative block changes to different screen-space coordinates, the corresponding fusion cache contents 225 and coverage mask 226 are cleared. Finally the fusion cache contents 225 are updated to the input. The updated coverage mask 226 is stored into a local register file.

The computed occlusion data is buffered in occlusion buffer 24. The simplest implementation of the occlusion buffer is non-compressed memory stream. If the memory stream capacity is sufficient, geometry of an entire frame can reside in the occlusion buffer while the occlusion information is being constructed. The subsequent 2^{nd} visibility test 25 uses the updated occlusion information. A more advanced implementation of occlusion buffer uses lossless compression. Compression is beneficial because it reduces the memory and memory bandwidth requirements. In case of compression the occlusion unit 24 comprises a compressor 29, memory management unit 210, ring buffer 211 and decompressor 24. Second visibility test 25 is similar to first visibility test 22 but it has all the occlusion information of the primitives that where visible after first visibility test. This reduces significantly the amount of the information to be rasterized by pixel processing unit 26. Pixel processing unit 25 comprises means for rasterization 215 and a frame buffer 216. An optional high resolution Z-buffer 217 may be included. The frame buffer 216 is applied so that the whole screen may be computed before showing on the screen. The block, cache and memory sizes of the example embodiment presented in figure 2 and 3 are just examples and may be selected depending on the hardware and software requirements.

It is obvious to a person skilled in the art that with the advancement of technology, the basic idea of the invention may be implemented in various ways. The invention and its embodiments are thus not limited to the examples described above; instead they may vary within the scope of the claims.

## Claims

1. A method for testing visibility of graphics primitives, which method comprises the steps of:
computing the geometry of graphics primitives;
testing the visibility of the computed primitives in the first visibility test;
based on said first test storing the occlusion data of the visible primitives for next comparison; and
computing the occlusion culling data for each visible primitive;
**characterized in that** the method further comprises steps:
collecting stored primitives to an occlusion culling data buffer;
testing the visibility of the collected primitives in the second visibility test;
rasterizing visible primitives of the second visibility test.

2. The method according to claim 1, **characterized in that** discarding the hidden primitives of the first visibility test.

3. The method according to claim 1 or 2, **characterized in that** storing Z values to occlusion fusion cache while computing occlusion.

4. The method according to claim 1, 2 or 3, **characterized in that** after said first test collecting occlusion data of the visible primitives belonging to the frame to be rendered to the occlusion culling data buffer.

5. The method according to claim 1- 2 or 3, **characterized in that** after said first test collecting a predefined amount of occlusion data of the primitives to the occlusion culling data buffer.

6. The method according any of preceding claims 1 - 5, **characterized in that** compressing the occlusion buffer.

7. The method according any of preceding claims 1 - 6, **characterized in that** the method further comprises testing visibility of the object before the geometry processor by bounding volume method.

8. The method according to any of preceding claims 1 - 7, **characterized in that** testing the visibility of the primitive in the first and the second visibility test with low resolution Z-buffer.

9. A system for testing visibility of graphics primitives, which system further comprises:
a Geometry processor (20);
a Z-buffer component (21);
first visibility test module(22);
occlusion fusion unit (23); and
pixel processing means (26)
**characterized in that** the system further comprises:
an occlusion data buffer (24); and
a second visibility test module (25);

10. The system according to claim 9, **characterized in that** the first visibility test is arranged (22) to discard hidden primitives.

11. The system according to claims 9 or 10, **characterized in that** the occlusion data buffer (24) is arranged to collect occlusion data of the primitives belonging to the frame to be rendered.

12. The system according to claims 9 or 10, **characterized in that** occlusion data buffer (24) is arranged to collect a predefined amount of occlusion data of the primitives.

13. The system according to any of preceding claims 9 - 12, **characterized in that** the system further comprises means for compressing (29) and decompressing (212) the occlusion data buffer (24).

14. The system according to any preceding claims 9 - 13, **characterized in that** the system further comprises means for bounding volume testing.

15. The system according to any preceding claim 9 - 14, **characterized in that** the system further comprises an occlusion fusion cache.

16. The system according to any preceding claim 9 - 15, **characterized in that** the Z-buffer connected to first visibility test module is a low resolution Z-buffer.

17. The system according to claim 17, **characterized in that** the system further comprises a high resolution Z-buffer connected to said second visibility test.

18. The system according to claim 16, **characterized in that** the values stored to the low resolution Z-buffer are calculated in occlusion fusion cache.
